# FASCICULE DE BREVET EUROPEEN

(11) **EP 2 724 408 B1**
(45) Date de publication et mention de la délivrance du brevet: **29.07.2015**
(21) Numéro de dépôt: 12735926.3
(22) Date de dépôt: 22.06.2012
(51) Int. Cl.: H01M 4/86, H01M 12/06, H01M 4/88

(54) **ELECTRODE A DIFFUSION GAZEUSE DE GRANDE CAPACITE**
GASDIFFUSIONSELEKTRODE VON HOHER KAPAZITÄT
HIGH CAPACITY GASEOUS DIFFUSION ELECTRODE

(30) Priorité: 24.06.2011 FR 1101961
(43) Date de publication de la demande: 30.04.2014
(73) Titulaire: Commissariat à l'Énergie Atomique et aux Énergies Alternatives, 75015 Paris (FR)
(72) Inventeur: KIRCHEV, Angel, Zhivkov, F-73100 Aix-les-Bains (FR)
(74) Mandataire: Talbot, Alexandre
(86) Numéro de dépôt international: PCT/FR2012/000252
(87) Numéro de publication internationale: WO 2013/007887

(56) Documents cités:
- FR-A- 1 541 350
- US-A- 3 772 089
- US-A1- 2010 119 919

## Description

### Domaine technique de l'invention

L'invention est relative à une électrode à diffusion gazeuse, et plus particulièrement à une électrode bifonctionnelle à oxygène utilisée dans une batterie métal-air.

### Etat de la technique

Les batteries métal-air utilisent l'oxygène de l'atmosphère et un métal en tant que réactifs pour générer de l'électricité. Elles font l'objet de nombreux développements du fait de leur densité d'énergie élevée. Par exemple, les batteries zinc-air ont une densité d'énergie théorique de l'ordre de 820 Ah/kg.

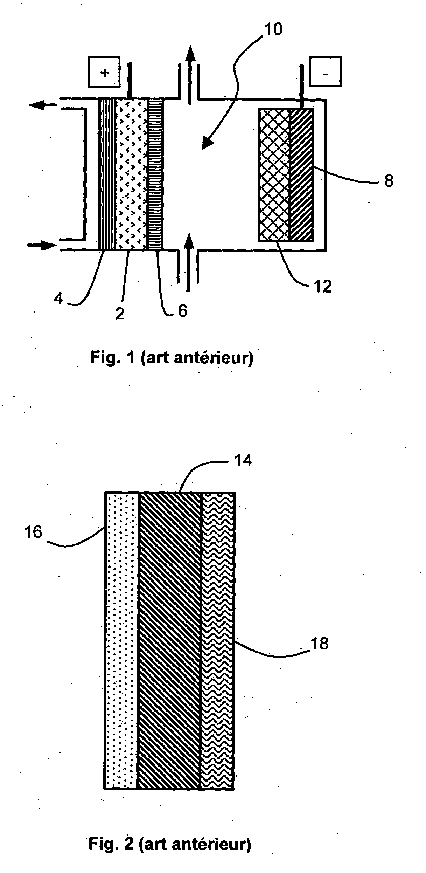

La figure 1 représente une batterie zinc-air à flux d'électrolyte telle que décrite dans l'article « Preliminary study of alkaline single flowing battery » (J. Pan et al., Electrochemistry Communications 11 (2009) 2191-2194). La batterie comprend une électrode positive (appelée également cathode à air) constituée d'une mousse 2 de nickel et de deux membranes catalytiques 4, 6 de part et d'autre de la mousse 2. Un collecteur de courant métallique 8 est utilisé en tant qu'électrode négative (anode). Un électrolyte 10 alcalin circule entre les électrodes positive et négative.

Dans ce type de batterie, la cathode est dite bifonctionnelle, c'est-à-dire qu'elle fonctionne en charge comme en décharge. En décharge, l'oxygène est réduit au niveau de la membrane catalytique 4 en contact avec l'air, et lors de la charge, l'oxygène est régénéré par oxydation de l'électrolyte sur la couche catalytique 6. La mousse de nickel 2 joue ici le rôle de support mécanique et de collecteur de courant.

Du côté de l'anode, du zinc 12 s'électrodépose sur le collecteur 8 lors de la charge et se dissout dans l'électrolyte 10 pendant la décharge de la batterie.

La figure 2 représente une autre configuration classique de cathode à air bifonctionnelle. La cathode comprend une seule couche catalytique 14, au lieu de deux sur la figure 1. La couche 14 est disposée entre deux membranes poreuses 16 et 18 électriquement conductrices. Les membranes 16 et 18 constituent le support mécanique du matériau catalyseur 14 et servent de collecteurs de courant. Elles sont appelées couches de diffusion, car l'oxygène de l'air et les ions de l'électrolyte pénètrent dans leurs pores et diffusent jusqu'au matériau catalyseur 14.

La couche catalytique 14 constitue le siège des réactions de réduction et d'évolution (production) de l'oxygène. Le matériau de la couche 14, c'est-à-dire le matériau actif de l'électrode, est une pâte formée de particules ou fibres de carbone, de catalyseurs, de liants hydrophile et hydrophobe, et d'un solvant. La répartition entre la quantité de liant hydrophobe et la quantité de liant hydrophile conditionne le bon fonctionnement de l'électrode.

La membrane 16, en contact avec l'air, est une feuille en fibres de carbone rendue hydrophobe, par exemple par un revêtement à base de chaînes carbonées, pour empêcher l'humidité de l'air de pénétrer dans l'électrode. La feuille présente des pores de taille microscopique, de l'ordre de 1 µm à 100 µm de diamètre.

La membrane 18, du côté de l'électrolyte, est une grille en nickel ou une toile en fibres de carbone. La membrane 18 est hydrophile et comprend des pores de taille microscopique (0,1 µm à 50 µm), ce qui facilite la diffusion de l'électrolyte 10 vers la couche catalytique 14. La surface de la membrane 18 en contact avec l'électrolyte est généralement recouverte d'une couche de catalyseur additionnelle (non représentée), par exemple une couche d'hydroxyde de nickel (Ni(OH)₂) dans le cas d'un électrolyte alcalin. Cette couche permet d'améliorer les propriétés électrocatalytiques de la cathode pour la réaction d'évolution de l'oxygène et d'augmenter sa durée de vie.

Les couches 14, 16 et 18 sont généralement laminées, à chaud ou à froid, pour former la cathode à air. Lors de cette étape de fabrication, le matériau actif pénètre en partie dans les pores des membranes 16 et 18, ce qui augmente l'activité catalytique.

Pour certaines applications, on optimise la cathode à air en remplaçant la couche composite 14 par deux couches catalytiques superposées de différentes natures. La couche catalytique en contact avec la membrane 16 (réaction avec l'oxygène) est hydrophobe tandis que la couche en contact avec la membrane 18 (réaction avec l'électrolyte) est hydrophile et généralement plus fine.

La vitesse de réaction de l'air sur la cathode est bien inférieure à celle du métal à l'anode. Ainsi, la cathode à air est l'un des éléments qui limitent la puissance de la batterie.

Afin d'augmenter la capacité de l'électrode positive, il est connu d'augmenter sa surface de réaction. Or, cette augmentation de surface est difficilement envisageable dans le cas d'une structure planaire comme celles des figures 1 et 2. En effet, pour augmenter la surface de réaction, il faudrait augmenter les dimensions transversales de l'électrode (longueur et largeur), ce qui imposerait des contraintes fortes sur le dimensionnement de la batterie. Ces contraintes seraient, au final, préjudiciables pour le fonctionnement d'une batterie métal-air, notamment au niveau de la gestion de l'électrolyte.

Le document JP61082672 décrit une autre configuration d'électrode à diffusion gazeuse, en forme de tube. Deux couches catalytiques sont collées entre elles, puis roulées pour former des cylindres concentriques. Les couches sont ensuite solidarisées par frittage. L'électrolyte circule à l'intérieur du tube et l'air réagit avec la surface extérieure du tube. Une telle électrode est difficile à intégrer dans une batterie classique ou nécessite de modifier en profondeur l'organisation de la batterie. En outre, la technique de fixation des couches ne garantit pas une étanchéité suffisante pour un bon fonctionnement de l'électrode.

Le document FR1541350 décrit une électrode à oxygène ondulée et une cellule électrochimique métal-gaz contenant cette électrode. L'électrode, en forme de plaque, contient du platine comme matériau catalyseur et présente des surfaces ondulées. Cette forme particulière permet d'augmenter la surface de réaction de l'électrode sans augmenter substantiellement ses dimensions. Par contre, cette électrode est difficile à intégrer dans une cellule électrochimique métal-gaz. En particulier, il est délicat de fixer cette électrode sur les parois dé la cellule sans risque de fuites de l'électrolyte.

### Résumé de l'invention

On constate qu'il existe un besoin de prévoir une électrode à diffusion gazeuse présentant de grandes surfaces de réaction, mais avec une architecture robuste et adaptée aux boîtiers des batteries, pour faciliter son intégration dans celles-ci.

On tend à satisfaire ce besoin en prévoyant un empilement comprenant successivement une couche de diffusion d'un gaz, une couche catalytique et une couche de diffusion d'un électrolyte. Deux portions de chaque couche de diffusion sont disposées en regard et séparées par une couche en matériau polymère thermoplastique. Un cadre essentiellement constitué du matériau polymère thermoplastique forme des faces latérales de l'électrode.

On vise également un procédé rapide et facile à mettre en oeuvre pour réaliser une telle électrode.

On tend vers cet objectif à l'aide des étapes suivantes :
a) prévoir un empilement comprenant successivement une couche de diffusion d'un gaz, une couche catalytique et une couche de diffusion d'un électrolyte ;
b) former une première couche en matériau polymère thermoplastique sur la couche de diffusion d'un gaz et une deuxième couche en matériau polymère thermoplastique sur la couche de diffusion d'un électrolyte, les première et seconde couches ayant chacune la forme d'un cadre à la périphérie de la couche de diffusion associée ;
c) déformer l'empilement de manière à disposer en regard deux portions de la couche de diffusion d'un gaz ;
d) déformer l'empilement de manière à disposer en regard deux portions de la couche de diffusion d'un électrolyte ; et
e) coller les portions en regard de chaque couche de diffusion à l'aide du matériau polymère thermoplastique des première et seconde couches.

Selon un développement, le collage des portions en regard est réalisé par traitement thermique.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels :
- la figure 1, précédemment décrite, représente une batterie zinc-air à flux d'électrolyte selon l'art antérieur ;
- la figure 2, précédemment décrite, représente une configuration d'électrode à diffusion d'air selon l'art antérieur ;
- les figures 3 à 5 représentent des étapes d'un procédé de réalisation d'électrode à diffusion gazeuse, selon un mode de mise oeuvre préférentiel de l'invention ;
- les figures 6 et 7 représentent en trois dimensions une électrode à diffusion gazeuse selon le mode de réalisation des figures 3 à 5 ;
- la figure 8 est une section de l'électrode à diffusion gazeuse, selon le plan de coupe P de la figure 7 ;
- la figure 9 représente des variantes de réalisation de l'étape de la figure 5 ; et
- les figures 10 et 11 représentent des étapes supplémentaires d'un procédé de réalisation d'électrode à diffusion gazeuse selon l'invention.

### Description d'un mode de réalisation préféré de l'invention

Afin d'augmenter de façon significative la puissance de la cathode à air, on déforme en volume un empilement comprenant successivement une couche de diffusion de l'air, une couche catalytique et une couche de diffusion de l'électrolyte, tel que celui représenté à la figure 2. L'empilement est plié ou courbé de manière à disposer en regard deux portions de l'une des couches de diffusion. Cette déformation est maintenue à l'aide d'une couche polymère disposée entre les deux portions et jouant le rôle de colle. Avantageusement, l'empilement est plié dans un sens, puis dans le sens opposé, à plusieurs reprises, comme pour former un serpentin.

On obtient ainsi une cathode avec une couche catalytique et des couches de diffusion ondulées. La cathode présente alors des surfaces de réaction plus importantes, pour des dimensions transversales identiques. Par contre, la cathode gagne en épaisseur (la distance séparant le côté « air » du côté « électrolyte » de la batterie) à cause du pliage. Toutefois, l'épaisseur de la cathode est moins contraignante que les autres dimensions pour son intégration dans une batterie. On obtient donc une structure compacte et facile à intégrer dans une batterie classique.

En outre, l'électrode est robuste. Le maintien du pliage est assuré par un matériau polymère, facile à mettre en oeuvre, par exemple en le déposant au préalable sur l'empilement.

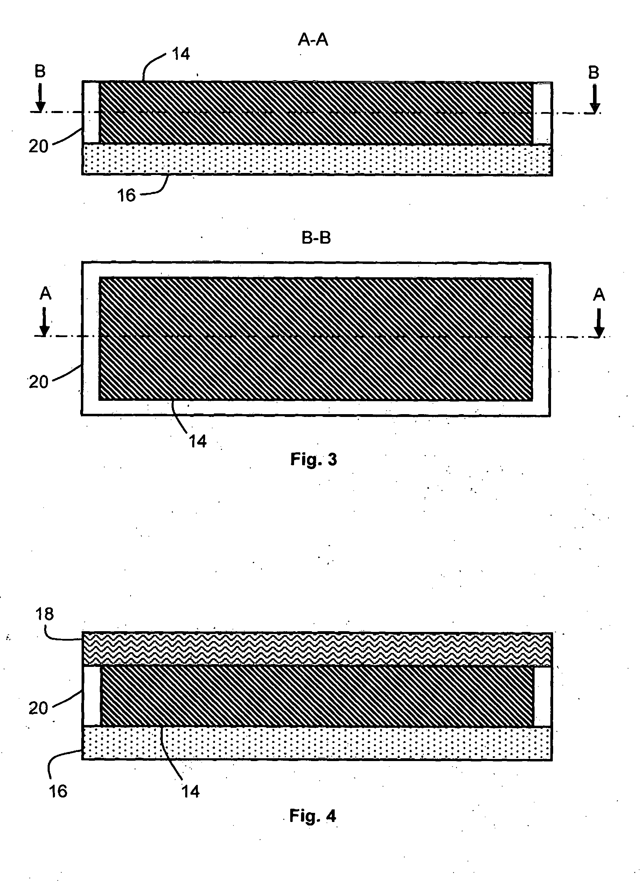

Les figures 3 à 5 représentent un mode de mise en oeuvre préférentiel de procédé de réalisation d'une telle électrode.

Une première étape, représentée en vue de face (coupe selon l'axe A-A) et en vue de dessus (coupe selon l'axe B-B) sur la figure 3, consiste à recouvrir l'une des couches de diffusion, par exemple la couche 16 de diffusion d'air, de la couche catalytique 14. De préférence, la couche 16 comprend une feuille en fibres de carbone d'épaisseur comprise entre 100 µm et 300 µm et le matériau actif 14 est déposé sous la forme d'une pâte, sur une épaisseur variant entre 100 µm et 300 µm.

La pâte contient, de préférence, des fibres ou particules de carbone, des catalyseurs, des liants hydrophile et hydrophobe et au moins un solvant. A titre d'exemple, le solvant est choisi parmi l'eau, l'alcool polyvinylique et le n-méthylpyrrolidone (NMP), le liant hydrophobe est le polytétrafluoroéthylène (PTFE) ou le polyfluorure de vinylidène (PVDF), et le liant hydrophile est l'alcool polyvinylique (PVA), le polyvinylpyrrolidone (PVP) ou des nanoparticules de silice. Les particules de carbone supportent les centres catalytiques, de préférence à base de platine, cobalt, nickel ou fer.

Dans une variante de réalisation, la couche catalytique 14 est formée de deux sous-couches de différentes natures, l'une hydrophile et l'autre hydrophobe, visant à séparer le siège de la réaction de réduction du siège de la réaction d'évolution de l'oxygène.

Une couche 20, en un matériau polymère inerte vis-à-vis du matériau actif, est avantageusement formée sur la couche de diffusion 16, autour de la couche catalytique 14. La couche 20 constitue ainsi un cadre à la périphérie de la couche 14. Le matériau polymère est, de préférence, choisi parmi les polymères thermoplastiques, le polypropylène, le polyéthylène, le polystyrène, le polychlorure de vinyle (PVC) et le polyfluorure de vinylidène (PVDF) notamment. Le polymère 20 peut être déposé sous différentes formes, par exemple par émulsion ou en solution.

Le cadre 20 peut aussi être formé avant le dépôt du matériau actif. Il est par exemple laminé sur la feuille de carbone 16 puis rempli par la pâte de matériau actif 14 sur toute sa hauteur:

A la figure 4, on forme la couche de diffusion 18 associée à l'électrolyte sur la couche catalytique 14 et le cadre en polymère 20. La couche 18 comprend, de préférence, une toile en fibres de carbone d'une épaisseur comprise entre 100 µm et 300 µm. L'ajout de la couche 18 peut être réalisé par laminage à chaud ou à froid.

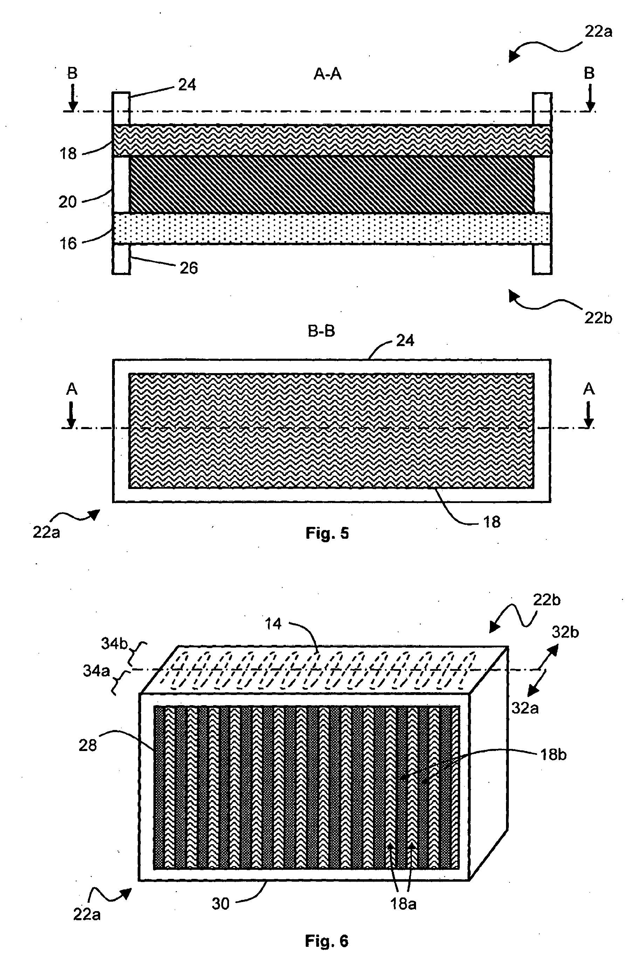

L'étape suivante correspond à la formation d'une couche en un matériau polymère sur au moins l'une des deux couches de diffusion, et dans le mode de réalisation préférentiel de la figure 5, sur chacune des couches de diffusion. Ces couches polymères sont, de préférence, laminées sur l'empilement de la figure 4.

Sur la figure 5, chaque couche de diffusion supporte une couche en matériau polymère, sous la forme d'un cadre disposé à sa périphérie. Ainsi, la face 22a de l'empilement, correspondant à la couche 18, est recouverte d'un cadre 24 et la face opposée 22b, correspondant à la couche 16, est munie d'un cadre 26.

Dans ce mode de réalisation préférentiel, le cadre supérieur 24 et le cadre inférieur 26 sont disposés à l'aplomb du cadre intermédiaire 20 et formés dans le même matériau thermoplastique. Les cadres 24 et 26 ont des épaisseurs identiques, comprises entre 2 et 10 mm. La largeur des cadres 24 et 26 est comprise entre 5 et 20 mm.

L'empilement est ensuite plié à plusieurs reprises dans le sens de sa largeur (perpendiculairement à l'axe A-A sur la figure 5), dans une direction puis dans la direction opposée. En d'autres termes, l'empilement est déformé de manière à mettre en contact deux portions du cadre 24 sur la face 22a (Fig.5 ; coupe B-B), puis deux portions du cadre 26 sur la face 22b. Cette opération est ensuite répétée en différentes zones de l'empilement, comme pour dessiner des vagues.

Après cette étape de déformation, l'empilement est soumis à un traitement thermique, de préférence à une température comprise entre 150 °C et 250 °C. Alors, le polymère thermoplastique qui constitue les cadres 24 et 26 se ramollit et les portions en contact des cadres 24 et 26 sont soudées. Après que le matériau thermoplastique a refroidi, les plis de l'empilement sont solidement fixés.

La figure 6 représente l'électrode à diffusion gazeuse obtenue après cette étape de traitement thermique. L'électrode a globalement la forme d'un parallélépipède rectangle. Elle comprend, au centre, une structure 28 composée de la couche catalytique et des couches de diffusion. La structure 28 comprend deux faces principales 22a et 22b, courbées et correspondant respectivement aux couches de diffusion 18 et 16. La couche catalytique 14, au centre de cette structure, est représentée en traits pointillés. La structure 28 comprend en outre des faces latérales entourées d'un cadre 30.

La face principale 22a de la structure 28 a la forme d'un serpentin. Cette géométrie particulière est représentée sur la figure 6 par des tranches sombres et des tranches claires entrelacées. Les tranches claires 18a correspondent à des zones de la couche de diffusion 18 proches de la surface de l'électrode (en direction de la flèche 32a), et les tranches sombres 18b correspondent à des zones de la couche 18 qui s'enfoncent vers l'intérieur de l'électrode (en direction de la flèche 32b).

Dans l'exemple de la figure 6, les tranches sombres et claires sont sensiblement de même superficie. L'empilement ayant été déformé de manière symétrique, cela signifie que les zones 18a sont situées dans une moitié 34a de l'électrode et que les zones 18b sont situées dans la moitié restante 34b.

Chacune des zones 18a et 18b de la couche de diffusion est destinée à rentrer en contact avec un électrolyte. L'accès de l'électrolyte aux zones 18a est quasi instantané, compte tenu de leur proximité avec le bord de l'électrode. Par contre, pour accéder à une zone 18b, l'électrolyte s'engouffre dans une fente correspondant à l'espacement entre deux zones 18a consécutives. Cet espacement (c'est-à-dire la largeur d'une zone 18b) est inférieur ou égal à l'épaisseur cumulée de deux portions collées de polymère, soit deux fois l'épaisseur du cadre 24. Il est, de préférence, compris entre 100 µm et 500 µm.

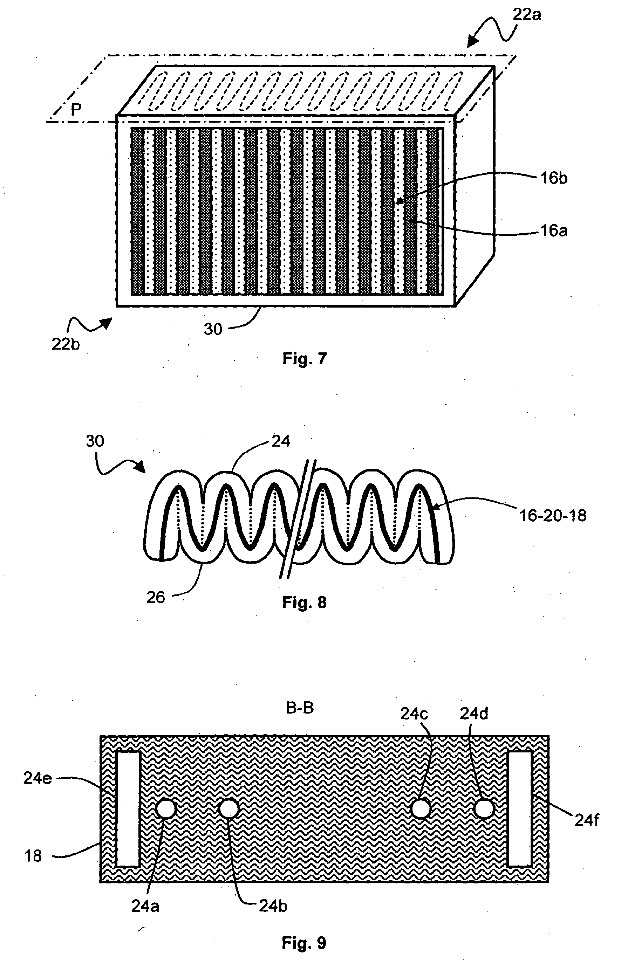

La figure 7 représente l'électrode à diffusion gazeuse du côté de la face principale 22b. De façon similaire, la face 22b est constituée de la couche de diffusion 16 ondulée lors de l'étape de pliage. Comme la couche de diffusion 18, la couche 16, en contact avec l'air, est représentée en plusieurs. zones. Les zones 16a sont situées à l'intérieur de l'électrode et les zones 16b sont situées sur le bord de l'électrode.

La figure 8 est une section de l'électrode de la figure 7 dans la partie supérieure du cadre 30, selon un plan P perpendiculaire aux faces principales 22a et 22b.

Le cadre 30 est formé par les bords de l'empilement, c'est-à-dire les couches de diffusion 16 et 18 encastrées dans les couches 20, 24 et 26 en matériau polymère thermoplastique (Figure 5). Dans la partie supérieure et la partie inférieure du cadre 30, les bords de l'empilement ont été repliés sur eux-mêmes. Sur la figure 8, l'empilement des couches 16, 20 et 18 est représenté par un unique trait plein épais tandis que les zones de pliure du matériau polymère sont représentées en pointillés. Comme l'épaisseur des cadres 24 et 26 est plus importante que celles des couches 16 et 18, le cadre 30 est essentiellement constitué de matériau polymère thermoplastique.

La présence des cadres 24 et 26 en matériau polymère thermoplastique (plus le troisième cadre 20 le cas échéant) facilite l'intégration de l'électrode ' dans un boîtier d'une batterie. En particulier, une fois pliés, les cadres 24 et 26 forment, dans la partie inférieure et la partie supérieure de l'électrode, des surfaces planes qui serviront à fixer ou coller convenablement l'électrode dans le boîtier. En outre, la surface de collage de l'électrode dans le boîtier est augmentée par rapport à une électrode ondulée classique dépourvue de cadre 30, L'étanchéité de la batterie, vis-à-vis de l'électrolyte, en est grandement améliorée.

Le cadre 30 constitue une première armature de l'électrode. Il renforce mécaniquement la structure 28 de l'électrode. Lorsque que le matériau polymère thermoplastique est électriquement conducteur, il participe en outre au transport du courant dans l'électrode.

La figure 9 représente d'autres modes de réalisation de la couche polymère 24 sur la couche de diffusion 18. Plutôt que de former un motif unique aux bords de la couche 18, la couche polymère peut être déposée de façon discontinue, c'est-à-dire selon des motifs distincts. Ces motifs pourront d'ailleurs adopter différentes géométries.

A titre d'illustration, la couche polymère peut être déposée selon deux pastilles cylindriques 24a et 24b dans une première zone au milieu de la couche 18, et selon deux autres pastilles cylindriques 24c et 24d, alignées avec les pastilles 24a et 24b, dans une seconde zone. Dans ce cas, la pastille 24a pourra venir en contact de la pastille 24b, formant une première pliure, est la pastille 24c pourra venir en contact de la pastille 24d pour former une seconde pliure.

Dans une variante de réalisation, la couche polymère est déposée selon deux bandes rectangulaires 24e et 24f, respectivement aux extrémités gauche et droite de la couche 18. Dans cette configuration, les bandes 24e et 24f sont collées entre elles, à l'aide par exemple du traitement thermique. L'empilement est alors plié qu'une seule fois. La structure 28 aura alors la forme d'un « V » ou éventuellement celle d'un « U », selon l'épaisseur des motifs en matériau polymère.

L'utilisation de deux matériaux thermoplastiques est préférée car ils permettent de figer durablement la déformation de l'empilement après un traitement thermique. L'électrode bénéficie alors d'une longue durée de vie.

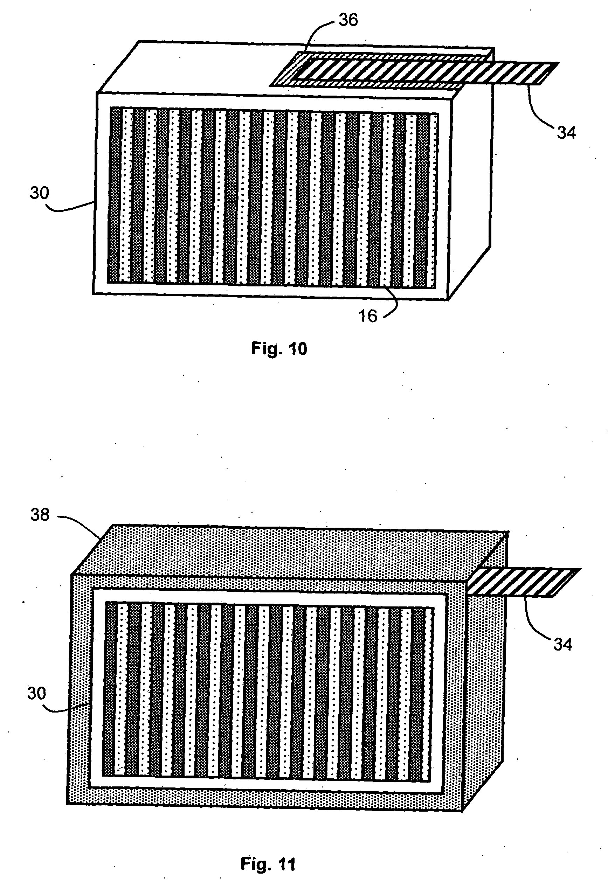

Les figures 10 et 11 représentent des étapes supplémentaires, mais optionnelles, qui améliorent encore l'intégration de l'électrode dans la batterie.

L'étape de la figure 10 consiste à placer un collecteur de courant métallique 34 sur l'une des faces du cadre 30, lorsque ce dernier est électriquement conducteur. Un tel collecteur peut constituer l'une des bornes de la batterie, pour la relier à un circuit électrique externe. Il peut également servir à l'interconnexion de plusieurs cathodes à air. Les électrons sont alors acheminés jusqu'à la couche catalytique, par l'intermédiaire des membranes conductrices 16 et 18, du cadre 30 et du collecteur 34. Le collecteur est, par exemple, en nickel ou en cuivre.

Avantageusement, la face du cadre 30 est partiellement ou entièrement recouverte d'une fine couche de métal 36 (métallisation). Cela permet de fixer le collecteur de courant 34 par soudure. Le métal de la couche 36 est, par exemple, du nickel ou un alliage de nickel et de cobalt déposé en phase vapeur (PVD, CVD).

Dans le cas d'un matériau polymère thermoplastique électriquement isolant, le cadre 30 n'assure pas une conduction suffisante des électrons. On peut alors envisager de former une grille métallique sur l'une ou l'autre (ou les deux) des faces principales 22a et 22b de l'électrode, en contact avec la couche de diffusion 18 ou 16. Cette grille est ensuite reliée au collecteur de courant 34.

De préférence, la grille est disposée du côté de la couche 16 en contact avec l'air. Ainsi, la densité de courant est uniformisée sur toute la surface de l'électrode, sans toutefois gêner l'apport en oxygène de la cathode. La grille est par exemple à base d'aluminium, bronze, cuivre ou titane.

A la figure 11, on forme une seconde armature 38 autour du cadre 30. Le cadre externe 38 consolide le cadre interne 30 et donne à l'électrode sa forme finale, pour s'adapter au mieux avec le boîtier de la batterie qui reçoit les électrodes. Le cadre externe 38 est, de préférence, obtenu par moulage d'un matériau plastique autour du cadre interne 30.

## Revendications

1. Procédé de réalisation d'une électrode à diffusion gazeuse, comprenant les étapes suivantes :
a) prévoir un empilement comprenant successivement une couche de diffusion d'un gaz (16), une couche catalytique (14) et une couche de diffusion d'un électrolyte (18) ;
b) former une première couche (24) en matériau polymère thermoplastique sur la couche de diffusion d'un gaz (16) et une deuxième couche (26) en matériau polymère thermoplastique sur la couche de diffusion d'un électrolyte (18), les première et seconde couches (24, 26) ayant chacune la forme d'un cadre à la périphérie de la couche de diffusion associée (16, 18) ;
c) déformer l'empilement de manière à disposer en regard deux portions de la couche de diffusion d'un gaz (16) ;
d) déformer l'empilement de manière à disposer en regard deux portions de la couche de diffusion d'un électrolyte (18) ; et
e) coller les portions en regard de chaque couche de diffusion à l'aide du matériau polymère thermoplastique des première et seconde couches (24, 26).

2. Procédé selon la revendication 1, dans lequel le collage des portions en regard est réalisé par traitement thermique.

3. Procédé selon l'une des revendications 1 et 2, dans lequel les étapes c) et d) sont répétées en plusieurs zones de l'empilement.

4. Procédé l'une quelconque des revendications 1 à 3, comprenant une étape de formation d'un troisième cadre (20) en matériau polymère thermoplastique à la périphérie de la couche catalytique (14), en regard des première et seconde couches (24, 26) en matériau polymère thermoplastique.

5. Electrode à diffusion gazeuse munie d'un empilement comprenant successivement une couche de diffusion d'un gaz (16), une couche catalytique (14) et une couche de diffusion d'un électrolyte (18), **caractérisée en ce que** deux portions de chaque couche de diffusion (16, 18) sont disposées en regard et séparées par une couche en matériau polymère thermoplastique (24, 26) et **en ce qu'**un cadre (30) essentiellement constitué du matériau polymère thermoplastique forme des faces latérales de l'électrode.

6. Electrode selon la revendication 5, **caractérisée en ce que** l'empilement est agencé sous la forme d'un serpentin.

## Patentansprüche

1. Verfahren zur Realisierung einer Gasdiffusionselektrode, mit den folgenden Schritten:
a) Vorsehen eines Stapels, der aufeinanderfolgend eine Diffusionsschicht eines Gases (16), eine Katalysatorschicht (14) und eine Diffusionsschicht eines Elektrolyten (18) umfasst;
b) Ausbilden einer ersten Schicht (24) aus thermoplastischem Polymermaterial auf der Diffusionsschicht eines Gases (16) und einer zweiten Schicht (26) aus thermoplastischem Polymermaterial auf der Diffusionsschicht eines Elektrolyten (18), wobei die erste und zweite Schicht (24, 26) jeweils die Form eines Rahmens am Umfang der damit verbundenen Diffusionsschicht (16, 18) aufweisen;
c) Verformen des Stapels derart, dass zwei Abschnitte der Diffusionsschicht eines Gases (16) einander gegenüberliegend angeordnet werden;
d) Verformen des Stapels derart, dass zwei Abschnitte der Diffusionsschicht eines Elektrolyten (18) einander gegenüberliegend angeordnet werden; und
e) Verkleben der jeder Diffusionsschicht gegenüberliegenden Abschnitte mit Hilfe des thermoplastischen Polymermaterials der ersten und zweiten Schicht (24, 26).

2. Verfahren gemäß Anspruch 1, wobei das Verkleben der gegenüberliegenden Abschnitte durch Wärmebehandlung erfolgt.

3. Verfahren gemäß einem der Ansprüche 1 und 2, wobei die Schritte c) und d) in mehreren Bereichen des Stapels wiederholt werden.

4. Verfahren gemäß einem der Ansprüche 1 bis 3, mit einem Schritt der Ausbildung eines dritten Rahmens (20) aus thermoplastischem Polymermaterial am Umfang der Katalysatorschicht (14), gegenüber der ersten und zweiten Schicht (24, 26] aus thermoplastischem Polymermaterial.

5. Gasdiffusionselektrode, die mit einem Stapel versehen ist, welcher aufeinanderfolgend eine Diffusionsschicht eines Gases (16), eine Katalysatorschicht (14) und eine Diffusionsschicht eines Elektrolyten (18) aufweist, **dadurch gekennzeichnet, dass** zwei Abschnitte jeder Diffusionsschicht (16, 18) einander gegenüberliegend angeordnet und durch eine Schicht aus thermoplastischem Polymermaterial (24, 26) getrennt sind, und dass ein im Wesentlichen aus dem thermoplastischen Polymermaterial gebildeter Rahmen (30) Seitenflächen der Elektrode bildet

6. Elektrode gemäß Anspruch 5, **dadurch gekennzeichnet, dass** der Stapel in Form einer Schlange angeordnet ist.

## Claims

1. Method of manufacturing a gaseous diffusion electrode, comprising the steps of:
a) providing a stack successively comprising a gas diffusion layer (16), a catalytic layer (14), and an electrolyte diffusion layer (18);
b) forming a first layer (24) of thermoplastic polymer material on the gas diffusion layer (16) and a second layer (26) of thermoplastic polymer material on the electrolyte diffusion layer (18), the first and second layers (24, 26) each having the shape of a frame at the periphery of the associated diffusion layer (16, 18);
c) deforming the stack to arrange in front of each other two portions of the gas diffusion layer (16);
d) deforming the stack to arrange in front of each other two portions of the electrolyte diffusion layer (18); and
e) bonding the opposite portions of each diffusion layer by means of the thermoplastic polymer material of the first and second layers (24, 26).

2. Method according to claim 1, wherein the bonding of the opposite portions is performed by thermal treatment.

3. Method according to any of claims 1 and 2, wherein steps c) and d) are repeated in several areas of the stack.

4. Method according to any of claims 1 to 3, comprising a step of forming a third frame (20) of thermoplastic polymer material at the periphery of the catalytic layer (14), in front of the first and second layers (24, 26) of thermoplastic polymer material.

5. Gaseous diffusion electrode provided with a stack successively comprising a gas diffusion layer (16), a catalytic layer (14), and an electrolyte diffusion layer (18), **characterized in that** the two portions of each diffusion layer (16, 18) are arranged in front of each other and separated by a layer of thermoplastic polymer material (24, 26) and **in that** a frame (30) essentially made of the thermoplastic polymer material forms lateral surfaces of the electrode.

6. Electrode according to claim 5, **characterized in that** the stack is arranged in a serpentine shape.
